# EUROPÄISCHE PATENTANMELDUNG

(11) **EP 2 072 880 A2**
(43) Veröffentlichungstag der Anmeldung: **24.06.2009**
(21) Anmeldenummer: 08450190.7
(22) Anmeldetag: 02.12.2008
(51) Int. Cl.: F16L 55/165

(54) **Vorrichtung und Verfahren zum Einziehen von Rohren in bestehende Altrohre**

(30) Priorität: 21.12.2007 AT 21112007; 20.05.2008 AT 8032008
(71) Anmelder: Rabmer, Josef, 4203 Altenberg (AT)
(72) Erfinder: Rabmer, Josef, 4203 Altenberg (AT)
(74) Vertreter: Patentanwälte BARGER, PISO & PARTNER

(57) **Zusammenfassung**

Die Erfindung betrifft eine Vorrichtung zum Einbringen eines Rohres in ein Altrohr (3) und ist dadurch gekennzeichnet, dass sie eine Rohrwickelvorrichtung (5) zur Herstellung eines Wickelrohres (8) fluchtend mit dem Altrohr (3) und im Altrohr (3) eine Zugvorrichtung für die Stirn des Wickelrohres (8) aufweist.

Das erfindungsgemäße Verfahren besteht darin, dass ein Wickelrohr (8) fluchtend mit dem Altrohr (3) vor dessen freiem Ende gewickelt, an seinem freien Ende mit einer Stirn (12) versehen und mit einer im Altrohr (3) befindlichen Zugvorrichtung verbunden und in das Altrohr (3) eingebracht wird, wobei die Zugvorrichtung axialen Zug und Drehmoment in Wickelrichtung auf die Stirn ausübt, und dass nach erfolgtem Einbringen des Wickelrohres (8) der verbleibende Ringspalt mit einer Fülle verfüllt wird.

## Beschreibung

Die Erfindung betrifft eine Vorrichtung und ein Verfahren zum Einziehen von Rohren in bestehende Altrohre.

Aus der WO2005/090848 A sind eine derartige Vorrichtung und ein derartiges Verfahren bekannt, bei dem aus einem Metallstreifen durch eine vor dem freien Ende des Altrohres umlaufende Wickelvorrichtung eine Schraubwendel geschaffen wird, die in das Altrohr eingezogen wird und dort als Auskleidung dient. Dabei erfolgt die Bewegung im Altrohr rein translatorisch und die Wickel sind miteinander nicht entlang ihrer schraubenförmigen Stoßlinie verbunden, bilden somit kein Rohr im Sinne des Wortes, sondern dienen nur als eine Art Auskleidung des Altrohres. In den so geschaffenen Wickel wird ein im Gegensinn geschraubter Wickel eingebracht und in diese Stützvorrichtung ein Kunststoffrohr, das an Ort und Stelle aufgeblasen und ausgehärtet wird. Abgesehen vom großen Aufwand ist die Konstruktion letztlich mechanisch und fluidtechnisch unbefriedigend.

Aus der US2007/0264085 A ist ein Verfahren bekannt, bei dem ein dauerhaft flexibles Rohr von einer Über-Tage angeordneten Spule bzw. einem LKW über mehrere Ecken in ein bestehendes Altrohr eingezogen wird. Dieses Verfahren eignet sich wegen der geringen mechanischen Stabilität nur für Abwasserrohre.

Aus dem DE 89 13 689 U ist es zum Auskleiden eines Stollens während dessen Vortrieb bekannt, aus einem Metallstreifen eine Schraubwendel mit deutlich kleinerem Durchmesser als der des Stollens zu wickeln, über eine große Länge in den Stollen einzuführen, den Durchmesser der Wendel dort zu vergrößern, bis sie an der Stollenwand anliegt, und dann die Wendel entlang der schraubenförmigen Ränder zu einem Rohr zu verbinden. Dies ist nur in Stollen großen Durchmessers möglich und schafft bestenfalls eine Auskleidung, aber kein Rohr mit der Fähigkeit, Druckdifferenzen zu ertragen.

Es gibt in vielen Teilen der Welt Rohre, darunter werden in der vorliegenden Anmeldung auch nicht kreisförmigen Querschnitt aufweisende und nicht aus klassischen Rohren aufgebaute Kanäle, Leitungen, Durchgänge, Schächte, Stollen etc. verstanden, die aufgrund ihres Alters und ihrer Beanspruchung für die ihnen zugedachten Zwecke nicht mehr ordnungsgemäß brauchbar sind.

Dabei ist einerseits an Versorgungsleitungen für Erdgas, Stadtgas oder anderes gasförmiges Brennmaterial zu denken, an undichte Entwässerungs- und Kanalsysteme, an Wasserleitungen und an Rohre von Fernwärmesystemen, wie sie insbesondere im Osten Europas weit verbreitet waren und nach wie vor sind.

Je nach Medium und Verwendungszweck sind dabei von den Leitungen - diese Bezeichnung wird in der vorliegenden Anmeldung synonym zum Begriff Rohre verwendet - unterschiedliche Anforderungen zu erfüllen, dies gilt natürlich insbesondere, wenn in eine bestehende, defekte Leitung eine neue eingezogen werden soll, um das Aufgraben und Freilegen der Leitung über ihre gesamte Länge zu verhindern.

Bewährt haben sich bei der Verwendung eines vorhandenen, aber unbrauchbaren Rohres im Wesentlichen zwei Techniken: Das Einziehen eines flexiblen Schlauches einerseits und das Einblasen eines sich umstülpenden Schlauches mit anschließendem Aushärten desselben andrerseits. Diese Methoden eignen sich für die Sanierung von Frischwasserleitungen und von Gasleitungen, somit für Medien die unter nicht zu hohem Druck stehen und keine ausgeprägt korrosiven Eigenschaften aufweisen. Eine weitere Methode besteht darin, Einzelrohre, sogenannte Schüsse, an die Einbringstelle zu transportieren, dort Stück für Stück in das vorhandene Rohr einzuschieben und jeweils nach erfolgtem, fast vollständigem Einschieben mit dem nachfolgenden Schuss zu verbinden, meist zu verschweißen. Diese Methode weist eine Reihe von Nachteilen auf, da einerseits die Baugrube oder, bei überirdischer Verlegung das Baugerüst deutlich länger sein muss als ein einzelner Schuss, was mit hohen Kosten verbunden ist und da das zuverlässige und korrekte Verbinden der einzelnen Schüsse nur von außen erfolgen kann und rund um den Ort, an dem die Verbindung vorgenommen wird, ausreichend Platz für die dabei benötigen Vorrichtungen (Schweißautomat, etc.) und die Arbeiter geschaffen werden muss.

Es besteht somit ein Bedarf an einer Vorrichtung der eingangs genannten Art, mit der es ermöglicht wird, ohne großen Platzbedarf an der Einbringungsstelle der neuen Leitung auch für große Länge, hohe Drücke, hohe Temperaturen und gegebenenfalls korrosive Medien eine neue Leitung ins vorhandene Rohr einzubringen.

Erfindungsgemäß werden diese Ziele dadurch erreicht, dass an der Einbringungsstelle eine Rohrwickelmaschine angeordnet ist und dass am freien, in das bestehende Rohr ragenden Ende des gewickelten Rohres eine Zugvorrichtung angreift, die auf das Wickelrohr in axialer Richtung eine Zugkraft ausübt und in Umfangsrichtung entsprechend der Wickelrichtung ein Drehmoment.

Auf diese Weise wird das von der Wickelvorrichtung geschaffene und direkt ins vorhandene Rohr geleitete Wickelrohr an seinem freien Ende geführt, unter Zug gehalten und es wird die vom Wickeln herrührende Drehbewegung unterstützt, sodass bei Durchmessern des Wickelrohres von 80 bis 1600 mm Längen von 200 m und mehr in einem Arbeitsgang erreicht werden. Zufolge der geringen Längenabmessung (gesehen in Richtung der Achse des gebildeten Wickelrohrs) der Wickelmaschine kann die Baugrube bzw. das Montagegerüst am Einfädelende des bestehenden Rohres klein gehalten werden. Das Wickelverfahren, das aus dem Stand der Technik gut bekannt ist, ermöglicht den Einsatz unterschiedlichster Materialen und Wandstärken und verschieden belastbare und dichtende Ausbildungen der schraubenlinienförmigen Verbindung des Wickelmaterials entlang des Umfanges. So können von üblichen Baustahl über schwach bis hin zu hochlegiertem, korrosionsfreiem Stahl in unterschiedlichster Stärke die verschiedensten Eigenschaften ausgenutzt werden, es ist die Verwendung vom verzinkten Stahlblech ebenso möglich wie von Aluminium und, in Sonderformen, von Kunststoffen. Die Verbindungen der schraubenförmigen Stöße zwischen der Materialbahn und ihrer Nachbarwicklung können verkrimpt (plastisches Kalt- oder Warmverformen), verschweißt oder verklebt sein, das Einlegen von endlosen Dichtungen ist bekannt und möglich und dergleichen mehr.

Durch das erfindungsgemäße Vorsehen einer Zugvorrichtung, diese kann entweder selbst angetrieben sein oder, was in den meisten Fällen wegen der einfacheren und robusteren Ausführung bevorzugt wird, mittels einer Seilwinde gezogen werden, verhindert man die Gefahr des Verhakens der Stirn des Wickelrohres an Unebenheiten im Altrohr. Gleichermaßen wird durch das Aufbringen eines Drehmomentes in Wickelrichtung die mit der Einschublänge zunehmende Wandreibung ausgeglichen, die ja nicht von der Wickelmaschine aufgebracht werden kann und auch nicht aufgebracht werden soll, da damit ja die Arbeitsparameter beim Wickeln und beim Verbinden der nebeneinander zu liegenden kommenden Wickellagen auf unbestimmte Weise verändert wären.

Selbstverständlich ist es möglich und bei größeren Einschublängen empfehlenswert oder gar unumgänglich, die aufgebrachte Zugkraft und das aufgebrachte Drehmoment zu überwachen und in Abhängigkeit von der bereits erreichten Einschublänge sukzessive zu vergrößern, um eben die Wandreibung auszugleichen.

Gleichermaßen ist es vorteilhaft im unteren Bereich des Altrohres zumindest zwei Seile oder Stangen vorzusehen, die Rollen tragen, auf denen das sich beim Einschieben ja weiterhin drehende Wickelrohr entlang rollen kann, wodurch statt der Gleitreibung gegenüber der Innenwand des Altrohres nur mehr die Rollreibung und ein gelegentliches Weiterhüpfen zufolge der schrägen Bewegung des Wickelrohres gegenüber der reinen Drehbewegung der Abstandhalter kommt. Es ist auch möglich statt dieser Abstandhalter zwischen der Wickelmaschine und dem Beginn des Altrohres Rollen oder Kufen mit gleitfreundlichem Kontaktmaterial auf die Außenseite des Wickelrohres aufzubringen, beispielsweise anzukleben oder mittels eines Umfangsringes durch Reibschluss zu befestigen, um so zu einer reinen Rollreibung zu kommen. Dadurch können die in einem Arbeitsgang zu bewältigenden Längen noch deutlich vergrößert werden.

In den meisten Fällen ist es sowohl aus mechanischen als auch thermischen Gründen vorteilhaft, den unvermeidlicher Weise zwischen dem Altrohr und dem Wickelrohr verbleibenden Ringspalt, dieser muss natürlich nicht kreisringförmig sein, sondern hängt in seiner Form ganz wesentlich von der Querschnittsform des Altrohres und von der Lage des Wickelrohrs im Altrohr ab, mit einem Füllmaterial auszufüllen. Damit kann einerseits die mechanische Festigkeit des Wickelrohres ganz besonders gesteigert werden, sodass es möglich wird, mit geringen Wandstärken auch hohe Drücke zuzulassen, es kann, bei geeigneter Wahl des Füllmaterials auch eine thermische Isolierung geschaffen werden, die insbesondere bei Fernwärmerohren sehr erwünscht ist. Dazu wird weiter unten noch ausführlich eine Ausgestaltung der Erfindung erläutert.

Wenn das Wickelrohr mittels der fix im Altrohr vorgesehen Abstandhalter in seiner Lage gehalten wird, so ist es leicht möglich, die für das Einfüllen des Füllmaterials notwendigen Rohrleitungen im unteren Bereich des Altrohres der Länge nach zu verlegen. Nach erfolgter Einbringung des Wickelrohres wird durch diese beiden Rohre beispielsweise 2-Komponenten-PU Schaum eingebracht und bei simultanem Zurückziehen der Rohre wird der ringförmige Zwischenraum mit dem Schaum gefüllt.

Die Erfindung wird im Folgenden anhand der Zeichnung näher erläutert. Dabei zeigt bzw. zeigen
die Fig. 1 den Bereich eines Altrohres, von dem aus das Wickelrohr eingeschoben wird,
die Fig. 2 den gegenüberliegenden Endbereich des Altrohres,
die Fig. 3 eine schematische axiale Draufsicht auf eine Zugvorrichtung,
die Fig. 4 einen schematischen Schnitt normal zur Rohrachse durch ein saniertes Rohr,
die Fig. 5 eine schematische Ansicht einer Zuführbohrung,
die Fig. 6, 7 und 8 verschiedene Ansichten einer Füllvorrichtung und
die Fig. 9 eine Ausgestaltung.

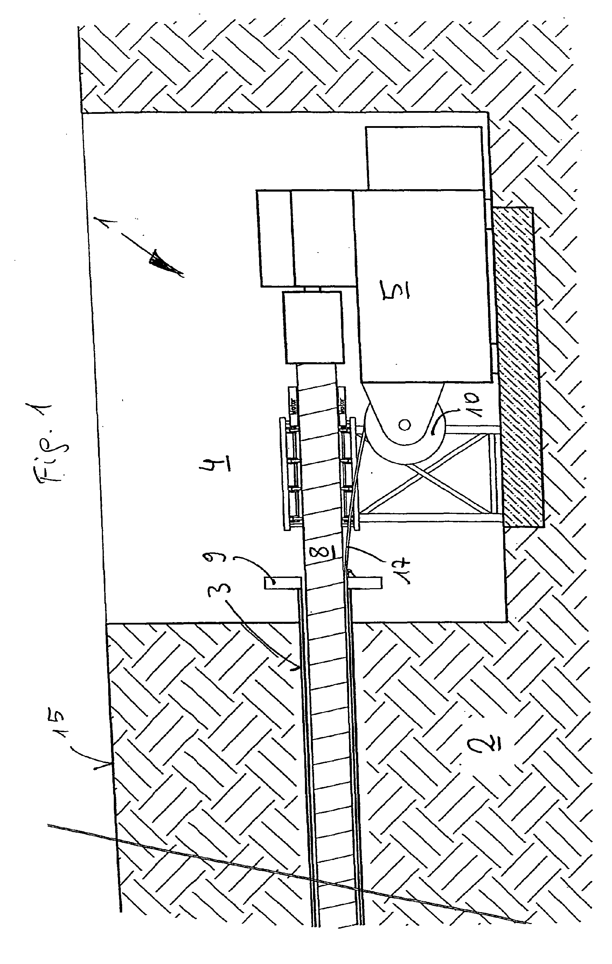

Die Fig. 1 zeigt die Situation im Endbereich eines Altrohres 3 von dem aus das neue Rohr eingebracht wird, wobei im Erdreich 2 eine Montagegrube 4 vorgesehen ist, in der sich ein Teil der in ihrer Gesamtheit mit 1 bezeichneten erfindungsgemäßen Vorrichtung befmdet.

Diese in der Montagegrube 4 befindlichen Vorrichtungsbestandteile umfassen im Wesentlichen eine herkömmliche Wickelmaschine 5 für ein Wickelrohr 8, wobei die Wickelmaschine 5 gegenüber dem Altrohr 3 so positioniert ist, dass das von ihr ablaufende Wickelrohr 8 parallel zur Achse des Altrohres 3 ausgeschoben wird und in einer solchen Position, dass es zur Gänze im freien Querschnitt des Altrohrs 3 verläuft, beispielsweise konzentrisch wie es ohne Beschränkung der Allgemeinheit im dargestellten Ausführungsbeispiel der Fall ist.

Aus Fig. 1 ist weiters ersichtlich, dass am einschubseitigen Ende des Altrohres 3 ein Flansch 9 angebracht ist, der im Wesentlichen dazu dient, weiter unten ausführlich beschriebene Positionierhilfen für das Wickelrohr 8 im Altrohr 3 zu positionieren. Weiters ist in der Montagegrube 4 integriert in die Wickelmaschine 5 eine Schlauchrolle 10 dargestellt, von der aus ein Schlauch oder zwei Schläuche in das Altrohr 3 eingeführt werden, entweder vor dem Beginn des Wickelvorganges oder gemeinsam mit dem Wickelrohr 8.

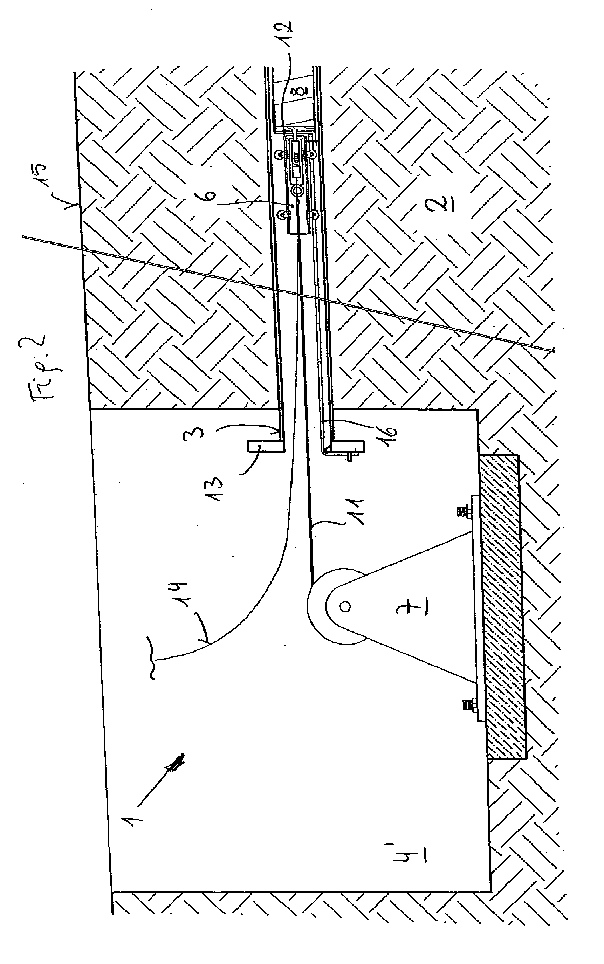

Die Fig. 2 zeigt das gegenüberliegende Ende des Altrohres 3 in einer Montagegrube 4'. In der Montagegrube ist eine Haspel 7 für ein Zugmittel 11 untergebracht, mit dem eine Zugvorrichtung 6 durch das Altrohr hindurch gezogen werden kann. Mit der Zugvorrichtung 6 verbunden ist die Stirn 12 des Wickelrohrs 8.

Weiters ist der Fig. 2 zu entnehmen, dass am Altrohr 3 ein Gegenflansch 13 analog zum Flansch 9 vorgesehen ist und dass von der Zugvorrichtung 6 eine Datenleitung 14 nach außen geführt wird. Die Zugvorrichtung 6 und gegebenenfalls die Haspel 7 mit dem entsprechenden, nicht dargestellten Antrieb für das Zugmittel 11 stellen die minimal notwendigen Bestandteile der Vorrichtung 1 am zugseitigen Ende des Altrohres 3 dar. Selbstverständlich muss die Haspel 7 nicht in der Montagegrube 4' angeordnet sein, es reicht, wenn dort eine Umlenkrolle vorgesehen ist und die Haspel auf der Oberfläche 15 in passendem Abstand von der Montagegrube 4' angeordnet ist. Weiters ist es nicht notwendig, eine Datenleitung 14, die darin zu übertragenden Daten und deren Bedeutung werden weiter unten erläutert, vorzusehen, es kann die Zugvorrichtung 6 auch über einen drahtlosen Datenkanal entlang des Inneren des Wickelrohres 8 verfügen, der mit einer entsprechenden Vorrichtung in der Montagegrube 4 kommuniziert. Eine solche Datenverbindung kann unter Umständen auch drahtgebunden im Zwischenraum zwischen der Zugvorrichtung 6 und der Wickelmaschine 5 vorgesehen sein. Bei kürzeren und unproblematischen Verhältnissen kann unter Umständen auf eine solche Datenübertragung verzichtet werden.

Die Funktionsweise der Vorrichtung 1 ist folgende: Nach Herstellung der Montagegruben 4 und 4', der Zubereitung der beiden Enden des Altrohres 3, bevorzugt mittels eines aufgesetzten oder aufgeschweißten oder sonst passend aufgebrachten Flansches 9, 13 und, zumindest im dargestellten Ausführungsbeispiel, dem Einbringen der weiter unten näher erläuterten Führungsmittel 16, wird mit dem Wickeln des Wickelrohres 8 begonnen. Nachdem ein kurzes Stück gewickelt worden ist, wird dieses mit einer passenden Platte oder einem Flansch oder einer Hülle zur Stirn 12 des Wickelrohres 8 umgestaltet und die Stirn 12 wird mit dem Zugmittel 6 passend verbunden, d.h. dass die im Folgenden erläuterten Zugkräfte und Drehmomente von dem Zugmittel 6 auf die Stirn 12 und somit das Wickelrohr 8 übertragen werden müssen und die Stirn entsprechend ausgebildet sein muss, was in Kenntnis der Erfindung für den Fachmann auf dem Gebiete der Wickelrohrherstellung keine Probleme mit sich bringt.

Nachdem die Zugvorrichtung 6 mit der Stirn und somit dem Beginn des Wickelrohres 8 verbunden ist, wird gleichzeitig die Wickelmaschine 5 in Betrieb genommen und mittels des Antriebs der Haspel 7 das Zugmittel gespannt und damit die Zugvorrichtung in Richtung von der Montagegrube 4 zur Montagegrube 4' durch das Altrohr 3 gezogen. Gleichzeitig wird der in der Zugvorrichtung 6 vorhandene Motor aktiviert, der die Stirn 12 mit einem Drehmoment in der selben Richtung beaufschlagt, wie das Wickelrohr 8 die Wickelmaschine 5 verlässt. Gleichzeitig wird durch die geometrischen Abmessungen der Zugvorrichtung 6 und der Stirn 12 das Wickelrohr in der Position in das Altrohr 3 eingeführt, die vor Beginn der Sanierungsmaßnahmen festgelegt worden ist.

Mit zunehmender Einführlänge neigt das Wickelrohr 8 unvermeidlich zum Durchbiegen und liegt sodann mehr und mehr auf den Führungsmitteln 16 auf. Diese bestehen aus zumindest zwei im unteren Bereich des Altrohres 3 und parallel zu seiner Achse gespannten Seilen oder Drähten, auf denen drehbar, aber axial unverschieblich, Rollen angeordnet sind, auf denen das Wickelrohr 8 mehr oder weniger punktuell oder linear aufliegt. Bei der Schraubbewegung, die das Wickelrohr 8 im Altrohr 3 vollführt, kommt es nun zwischen dem Wickelrohr und diesen Rollen einerseits und zwischen diesen Rollen und dem Altrohr andererseits zu einer teils gleitenden, teils rollenden Bewegung, deren Gesamtreibung allerdings so gering ist, dass ein Einschieben bzw. Einziehen des Wickelrohres über Längen von 200 m und mehr keine Probleme bereitet.

In einer Ausgestaltung ist es möglich, eine Führung verwenden, bei der die Führungsmittel mit festen Abstandhaltern zum Innenrohr versehen sind wobei dazwischen Rollen angeordnet sind, die nicht in Kontakt mit dem Altrohr kommen und deren Drehachsen entsprechend der Schräge der Wicklungen des Wickelrohres schräg verlaufen, was durch entsprechende Montage der Drehachsen an den Abstandhaltern erreicht wird. Damit wird die Reibung beim Einbringen des Wickelrohres in das Altrohr bestmöglich minimiert.

Weiters sind im dargestellten Ausführungsbeispiel mit der Zugvorrichtung 6 die Enden der von der Schlauchrolle 10 abgezogenen Schläuche 17 verbunden, die im tiefsten Bereich des Altrohres 3 zu liegen kommen und nur eine Längsbewegung im Altrohr 3 vollführen.

Wenn nun die Zugvorrichtung 6 die zugseitige Montagegrube 4' erreicht hat und die Stirn 12 des Wickelrohres 8 sich außerhalb des Altrohrs 3 befindet, wird sie vom Altrohr 8 entfernt, beispielsweise abgeschnitten, und die Zugvorrichtung wird aus der Montagegrube 4' entfernt. Der Ringspalt zwischen dem Altrohr 3 und dem Wickelrohr 8 im Bereich der Montagegrube 4' wird zumindest in seinem unteren Teil durch eine Schablone oder dergleichen abgedeckt und es wird durch die beiden Schläuche 17 beispielsweise ein 2-Komponentenschaum auf Polyurethanbasis zugeführt, während simultan dazu die Schläuche 17 auf die Schlauchtrommel 10 aufgezogen werden, sodass die Reaktion knapp vor ihren sich in Richtung zur Montagegrube 4 zurückziehenden Enden erfolgt und nach und nach den gesamten Ringspalt zwischen dem Altrohr 3 und dem Wickelrohr 8 ausfüllt.

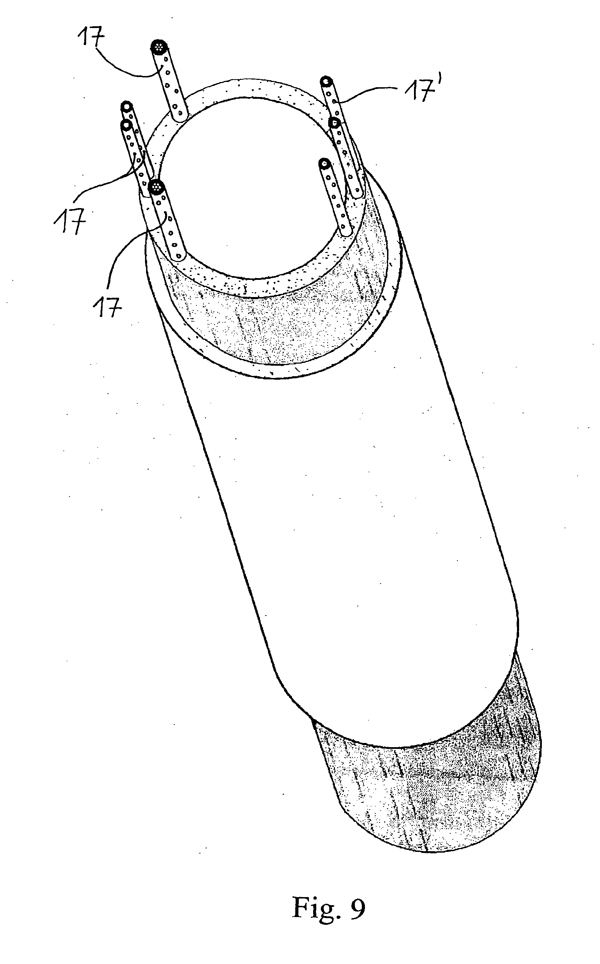

In einer in Fig. 9 dargestellten Variante ist es möglich, statt der Führungsmittel 16 Rohre oder Schläuche 17 zu verwenden, die entlang ihrer axialen Erstreckung mit Löchern 17' versehen sind, sodass die Verfüllung des Ringraumes über die ganze Länge des sanierten Abschnittes praktisch gleichzeitig erfolgt, in diesem Falle verbleiben die Schläuche 17 im Ringspalt, da sie nach dem erhärten des Füllmaterials nicht mehr ausgezogen werden können. Durch diese Maßnahme erreicht man auf kostengünstige Weise Verfülllängen von über einhundert Metern, was im stand der Technik völlig unmöglich war.

Sollten doch auch Führungsmittel 16 (wie z.B. in Fig. 2) in Kombination mit weichen Schläuchen verwendet werden, so dass sie benötigt werden, bis das Füllmaterial im Ringspalt ausreichend ausgehärtet ist, um das Wickelrohr 8 zu tragen, sind auch sie als verloren zu betrachten, da dann ein Auszug der Führungsmittel nicht mehr möglich ist.

Ein andere Möglichkeit des Führens besteht darin, statt der Führungsmittel 16 in passenden Abständen an der äußeren Mantelfläche des Wickelrohres 8 Erhebungen vorzusehen, diese können beispielsweise auf die Oberfläche geklebt oder mittels Punktschweißens angebracht werden und stellen sicher, dass es zwischen der inneren Mantelfläche des Altrohres 3 und dem Wickelrohr 8 nur zu punktuellen Berührungen kommt. Wenn diese Erhebungen Kufenform odgl. aufweisen und auf ihrer äußeren Oberfläche mit einem Material mit geringer Gleitreibungskoeffizienten (Teflon odgl.) versehen sind, kann auch bei großen Längen auf die Führungsmittel 16 verzichtet werden. Es ist auch möglich, in den Vorsprüngen Kugeln oder Rollen drehbar anzubringen, wodurch die Reibung weiter verringert wird. Es ist dann allerdings nur schwer möglich, die Schläuche 17 vor oder während der Herstellung des Wickelrohres 8 im Altrohr 3 vorliegen zu haben, da die Vorsprünge des Wickelrohrs in diesem Fall bei der schraubenförmigen Bewegung über die Schläuche gleiten müssten. Es ist aber in den meisten Fällen möglich, die Schläuche nach dem Einbringen des Wickelrohres an entsprechenden Zugmitteln durch den Ringspalt zu ziehen. Wenn als Verfüllmaterial beispielsweise Beton oder Leichtbeton gewählt wird, kann dieser nach dem Vorbild von Fließestrich so fließend gemischt werden, dass auf die Füllschläuche überhaupt verzichtet werden kann, es wird dann nur von einem der beiden Rohrenden, somit entweder von der Montagegrube 4 oder der Montagegrube 4' aus dieser Fließbeton in den Ringspalt eingebracht und füllt ihn auch bei großen Längen aus.

Die Datenleitung 14, sei sie wie nun dargestellt, aus der Montagegrube 4' geführt oder als eine Funk- oder Infrarotstrecke oder wie auch immer ausgebildet, dient insbesondere bei großen Zuglängen, bei rauen oder bereits löchrigen Altrohren, bei nur geringem Ringspalt oder sonstigen problematischen Einbausituationen dazu, einerseits Informationen über die real wirkenden Zugkräfte zwischen der Stirn 12 und der Zugvorrichtung 6 und die real wirkenden Drehmomente zwischen der Stirn 12 und der Zugvorrichtung 6 zu übertragen, um aus ihnen die notwendigen Rückschlüsse auf den Arbeitsfortschritt ziehen zu können, andererseits dazu, der Zugvorrichtung 6 bzw. den darin befindlichen Antrieben die entsprechend notwendigen Befehle zu erteilen. Dazu ist noch folgendes zu sagen:

Besonders bei großen Einzugslängen ist das von der Zugvorrichtung 6 auf das Wickelrohr 8 zu übertragende Drehmoment durchaus beträchtlich. Man darf dabei nicht außer Acht lassen, dass die handelsüblichen Wickelmaschinen 5 so ausgelegt sind, dass sie ein fehlerloses und funktionstüchtiges, den Vorgaben entsprechendes Wickelrohr 8 nur dann herstellen, wenn am fertiggestellten Wickelrohr praktische keine Gegenmomente auftreten. Dies ist dadurch bedingt, dass üblicherweise die Wickelrohre in Schüssen von einigen Metern Länge hergestellt werden, die sich während ihrer Herstellung auf Rollbetten odgl. befinden, sodass sie, abgesehen von den geringen Massenkräften und Trägheitsmomenten, kräfte- und momentenfrei sind. Durch die unvermeidliche Reibung des nunmehr über große Längen in einem Stück hergestellten Wickelrohres 8 im Altrohr 3 tritt hier eine gravierende Änderung an der Wickelmaschine 5 auf, der passend entgegenzuwirken ist die Aufgabe der Zugvorrichtung 6.

Aus dem Gesagten geht hervor, dass sowohl die Zugkraft als auch das Drehmoment, das von der Zugvorrichtung 6 auf die Stirn 12 ausgeübt wird, mit zunehmender Länge des bereits hergestellten Wickelrohres 8 größer wird, wobei die Zunahme von verschiedenen Parametern, vor allem von der jeweils auftretenden Reibung des Wickelrohrs an der inneren Mantelfläche des Altrohrs abhängt.

Es kann nun bei großen Einzugslängen der Fall auftreten, dass das aufzubringende Drehmoment so groß ist, dass die auf Rädern laufende Zugvorrichtung 6 durch das Gegenmoment sich im Altrohr 3 verläuft, d.h. eine Dreh- bzw. Schraubenbewegung vollführt, während die Stirn 12 sich nicht mehr verdreht oder nur mehr weniger verdreht als an sich notwendig wäre. Für solche besonders diffizilen Fälle ist es möglich, eine Zugvorrichtung 6 zu verwenden, die ihrerseits aus zwei Teilen besteht, wobei der eine Teil sich mittels elektrisch oder pneumatisch betätigter Stempel am Inneren des Altrohres 3 abstützt, während der andere Teil sich gegenüber dem nun fixierten Teil mit der notwendigen Schraubenbewegung, die ja geometrisch durch die jeweilige Einstellungen der Wickelmaschine 5 bekannt ist, bewegt. Da diese Relativbewegung der sodann zweigeteilten Zugvorrichtung 6 nur über einen vorgegebenen axialen Bereich (Hubbewegung) erfolgen kann, ist es in diesem Fall notwendig, eine Art Pilgerschrittbewegung zyklisch ablaufen zu lassen: Nach dem Erreichen der Endposition des mit der Stirn verbundenen Teiles wird die Fixierung des Außenteils am Altrohr 3 gelöst und es wird der Außenteil um die mögliche Hublänge zwischen den beiden Teilen mittels der Haspel 7 zurückgezogen. Dabei kann entweder die Verbindung zwischen den beiden Teilen, die beim Arbeitsgang die schraubenförmige Bewegung sicherstellt ausgeschaltet sein oder es bewegt sich der Außenteil nunmehr seinerseits schraubförmig weiter. Nach Erreichen des Endes dieser Bewegung wird der Außenteil erneut am Altrohr fixiert und der Innenteil ihm gegenüber wieder schraubenförmig bewegt. Selbstverständlich bedarf es in diesem Falle einer Koordination der Arbeitstakte mit der Wickelmaschine 5.

Eine weitere Möglichkeit besteht darin, die Zugvorrichtung 6 selbstfahrend auszubilden, sie bedarf dann nur einer passenden Energieversorgung. In diesem Fall können ebenfalls beide zuvor beschriebenen Unterarten von Wickelmaschinen, die kontinuierlich betriebenen und die im Pilgerschrittverfahren arbeitenden, verwendet werden.

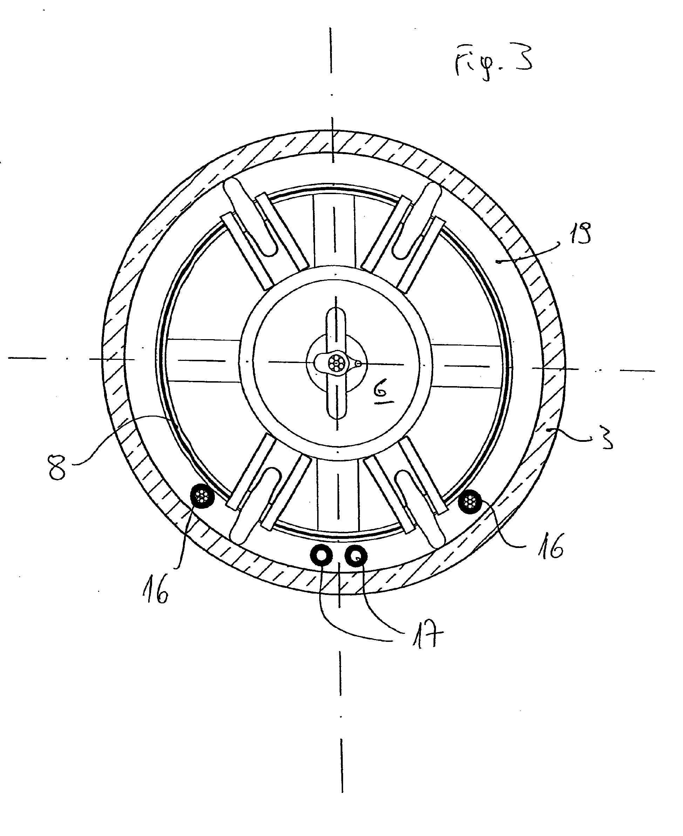

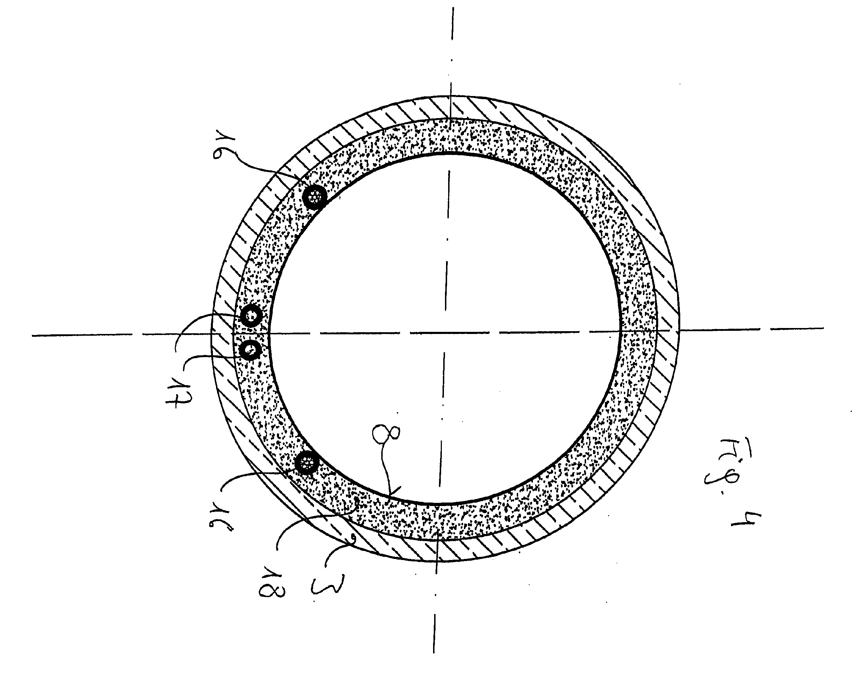

Die Fig. 3 zeigt in einer axialen Ansicht rein schematisch die mittels vier Rollen abgestützte Zugvorrichtung 6 (weitere Rollen sind wegen der fluchtenden Anordnung in Blickrichtung verdeckt) die Schläuche 17 und die Führungsmittel 16 sind im unteren Bereich des Altrohrs 3 eingezeichnet. Die Fig. 4 zeigt die Situation nach dem Verfüllen mit der Fülle 18: Im dargestellten Beispiel sind neben den Führungsmitteln 16 auch die Schläuche 17 im Ringspalt 19 verblieben.

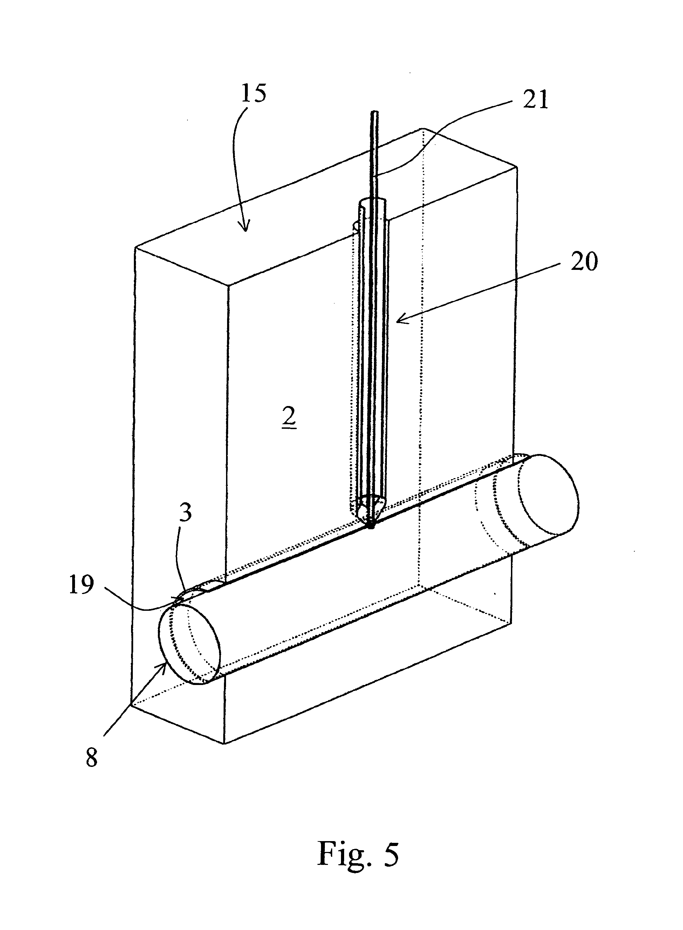

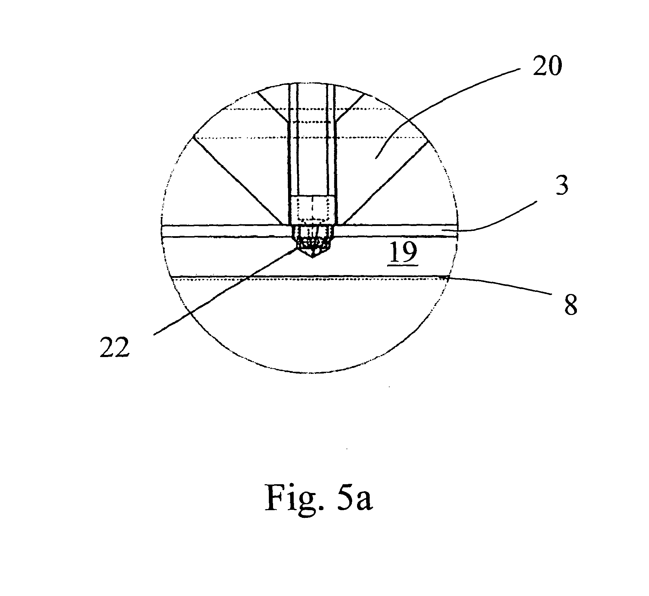

Die Fig. 5 zeigt eine rein schematische perspektivische Ansicht eines im Erdreich 2 vergrabenen Altrohres 3, in das bereits ein Wickelrohr 8, dessen Wickel nicht näher dargestellt sind um die Zeichnung nicht zu überfrachten, eingebracht ist. Um nun, insbesondere bei großen Längen und/oder geringen Durchmesserunterschieden und/oder einem Zustand des Altrohres 3, der die oben genannten Einbringungsmöglichkeiten für Isolierschaum oder dergleichen in den Ringspalt 19 nicht zulässt, den Schaum bzw. das Füllmaterial in den Ringspalt 19 einbringen zu können, wird nun in einer Ausgestaltung der Erfindung folgendermaßen vorgegangen:

Ein Erdbohrer 20 wird von der Erdoberfläche 15 aus durch das Erdreich 2 bis zum Erreichen des Altrohres 3 vorgetrieben. Nach dem Erreichen der äußeren Oberfläche des Altrohres 3 wird ein bevorzugt konzentrisch im Inneren des Erdbohrers 20 befindliches Zentralrohr 21 in Drehung versetzt, wodurch ein mit ihm verbundener Gewindebohrkopf 22 sich durch die Wand des Altrohres 3 bohrt. Durch Kanäle im Gewindebohrkopf 22 steht dessen Stirnfläche bzw. Flanken seiner Schneidflächen in fluiddurchlässiger Verbindung mit dem Inneren des Zentralrohres 21. Da diese Stirnflächen bzw. Flanken des Gewindebohrkopfes 22 in den Ringspalt 19 ragen, ist es sodann möglich das Füllmaterial, das ja in flüssigem, dickflüssigem oder pastösen Zustand in den Ringspalt eingebracht wird, wo es erstarrt, erhärtet oder ausschäumt, je nach der Natur des Materials, einzubringen. Abschließend kann durch Verdrehen des Zentralrohrs 21 in der entgegengesetzten Richtung der Gewindebohrkopf wieder aus dem Mantel des Altrohres 3 entfernt werden, der Ringspalt 19 ist mit dem Füllmaterial gefüllt und der Erdbohrer 20 wird zur Gänze entfernt. Alternativ kann er auch im Erdreich belassen werden und seinerseits zwischen dem Zentralrohr 21 und dem Außenrohr mit entsprechendem Material verfüllt werden.

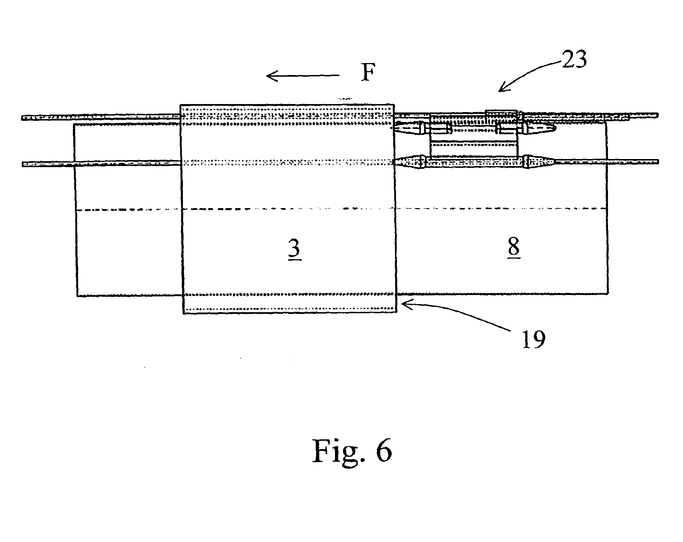

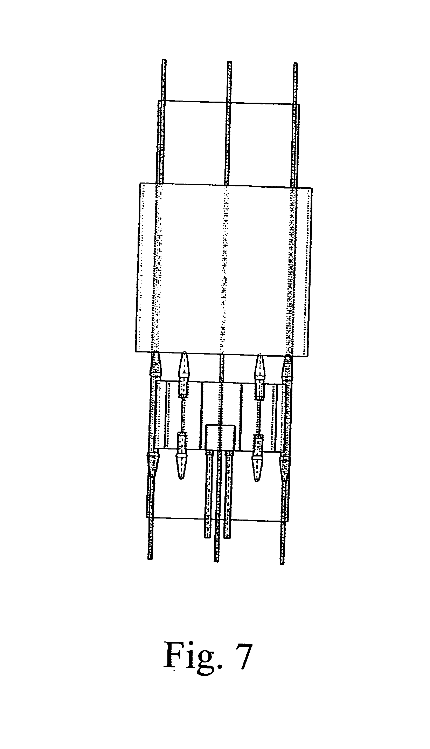

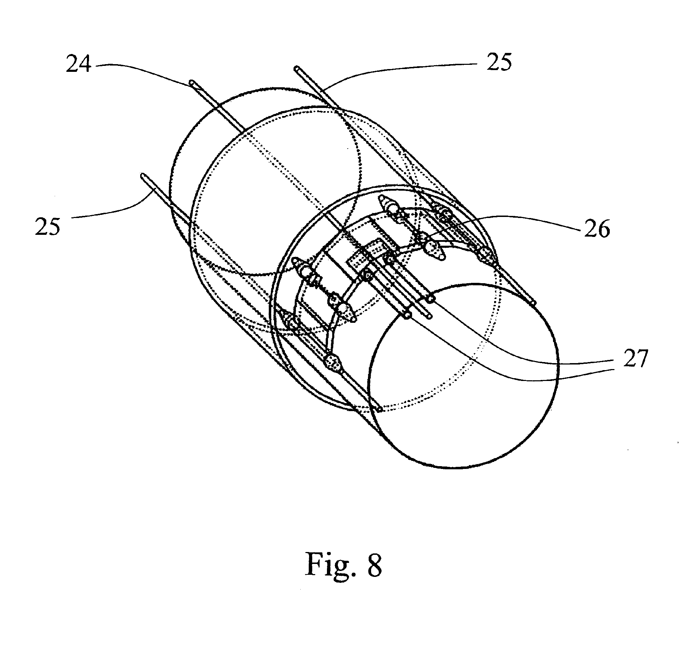

Eine wieder andere Ausgestaltung und Möglichkeit der Verfüllung des Ringspaltes 19 zeigen die Fig. 6 bis 8: Dabei zeigt die Fig. 6 eine Seitenansicht einer Füllvorrichtung 23, die Fig. 7 eine Draufsicht und die Fig. 8 eine schematische perspektivische Ansicht. Der Grundgedanke dieser Füllvorrichtung 23 ist die Idee, die Füllvorrichtung an drei Seilen, einem Zugseil 24 und zwei Führungsseilen 25 im oberen Bereich des Ringspaltes 19 auf dem Wickelrohr 8 aufliegend, über die gesamte Länge des sanierten Bereiches zu verfahren. Durch die beiden Führungsseile 25, die symmetrisch links und rechts vom Zugseil 24 angeordnet sind, ist es möglich die Füllvorrichtung 23 im oberen Bereich des Ringspaltes zu halten, was speziell für die Einbringung des Füllmaterials, das ja die Tendenz hat, im Ringspalt nach unten zu sinken, günstig ist. An der Füllvorrichtung 23 ist ein Misch-Sprühkopf 26 vorgesehen, von dem zwei Zufuhrschläuche 27 nach hinten, gesehen in Bewegungsrichtung F des Misch-Sprühkopfs 26, abgehen. Durch diese beiden Zufuhrrohre oder Schläuche 27 werden Zwei Komponenten des Füllmaterials zum Misch-Sprühkopf 26 transportiert, die sich beim Durchmischen im Misch-Sprühkopf zu einem reaktiven Gemisch ausbilden, das in der Folge ausschäumt und aushärtet und so den Ringspalt 19 zuverlässig füllt. Da die im Stand der Technik bekannten Gemische ausreichend lange flüssig bzw. zumindest viskos bleiben, ist es möglich, die Zufuhrschläuche 27 durch den bereits mit dem Füllmaterial versehenen Ringspalt 19 durchzuziehen, ohne dass die Füllvorrichtung 23 stecken bleibt. Wenn die Füllvorrichtung 23 am Ende des sanierten Bereiches angekommen ist, werden die Zufuhrschläuche 27 entweder gekappt und bleiben im Ringspalt, oder sie werden von der Vorrichtung 23 abgenommen und durch den Ringspalt zurückgezogen.

Die beiden Führungsseile ermöglichen es, wie bereits erwähnt, dass die Füllvorrichtung 23 im oberen Bereich des Ringspaltes 19 verbleibt. Um hier bei großen Längen die zur Betätigung der Führungsseile notwendigen Informationen zur Hand zu haben, ist es möglich, in der Füllvorrichtung 23 einen Sensor zu installieren, der die Position der Einbringvorrichtung 23 bezüglich der Vertikalen feststellt und dies über eine Funkstrecke, mittels Infrarot oder eines Kabels an die Zug- und Steuervorrichtung (nicht dargestellt) übermittelt, worauf diese das jeweils passende Führungsseil stärker unter Zug setzt als das andere.

Wie eingangs ausgeführt, muss das Altrohr kein Rohr im engeren Sinn sein, es kann ein Kanal, eine gemauerte Röhre und ähnliches sein. Es muss auch nicht unter der Erde verlaufen, in vielen Fällen sind insbesondere Rohre von Fernwärmesystemen auf Stelzen oder Pfeilern oberirdisch verlegt und führen in mehreren Metern Höhe über Straßen und Plätze weg. In diesem Fall ist die Erfindung statt mit einer Montagegrube mit einem Montagegerüst auszuführen, auch hier erhält man die Vorteile, dass der Platzbedarf für die eigentliche Baustelle wesentlich verringert wird, und dass gegebenenfalls die Füllung des Ringspaltes thermisch isolierende Eigenschaften aufweist.

## Patentansprüche

1. Vorrichtung zum Einbringen eines Rohres in ein Altrohr (3), **dadurch gekennzeichnet, dass** sie eine Rohrwickelvorrichtung (5) zur Herstellung eines Wickelrohres (8) fluchtend mit dem Altrohr (3) und im Altrohr (3) eine Zugvorrichtung (6) für die Stirn (12) des Wickelrohres (8) aufweist.

2. Vorrichtung nach Anspruch 1, **dadurch gekennzeichnet, dass** die Zugvorrichtung (6) ein Drehmoment in Wickelrichtung auf die Stirn (12) aufbringt.

3. Vorrichtung nach Anspruch 1, **dadurch gekennzeichnet, dass** die Zugvorrichtung (6) im Altrohr (3) mittels einer angetriebenen Haspel (7) von der Rohrwickelvorrichtung (5) weg bewegt wird.

4. Vorrichtung nach Anspruch 1, **dadurch gekennzeichnet, dass** ein erster Teil der Zugvorrichtung (6) mittels beweglicher Stempel, Füße od.dergl. am Altrohr (3) fixierbar ist und ein zweiter Teil, der mit der Stirn (12) verbunden ist, bezüglich des ersten Teils eine Schraubbewegung vollführt.

5. Vorrichtung nach Anspruch 1, **dadurch gekennzeichnet, dass** sie eine Steuerung aufweist, die die Bewegung der Zugvorrichtung (6) mit dem Betrieb der Rohrwickelvorrichtung (5) synchronisiert.

6. Vorrichtung nach Anspruch 1, **dadurch gekennzeichnet, dass** sie Führungsmittel (16), beispielsweise Seile mit Rollen, aufweist, die die Lage des Wickelrohres (8) bezüglich des Altrohres (3) bestimmen.

7. Vorrichtung nach Anspruch 1, **dadurch gekennzeichnet, dass** sie Führungsmittel in Form von Rohren oder Schläuchen (17) mit Löchern (17') in der Mantelfläche aufweist, die einerseits die Lage des Wickelrohres (8) bezüglich des Altrohres (3) bestimmen und andererseits der Zufuhr der Füllmasse dienen.

8. Verfahren zum Einbringen eines Rohres in ein Altrohr (3), **dadurch gekennzeichnet, dass** ein Wickelrohr (8) fluchtend mit dem Altrohr (3) vor dessen freiem Ende gewickelt, an seinem freien Ende mit einer Stirn (12) versehen und mit einer im Altrohr (3) befindlichen Zugvorrichtung (6) verbunden und in das Altrohr (3) eingebracht wird, wobei die Zugvorrichtung (6) axialen Zug und Drehmoment in Wickelrichtung auf die Stirn (12) ausübt, und dass nach erfolgtem Einbringen des Wickelrohres (8) der verbleibende Ringspalt (19) mit einer Fülle (18) verfüllt wird.

9. Verfahren nach Anspruch 8, **dadurch gekennzeichnet, dass** die Rohrwickelvorrichtung (5) und die Zugvorrichtung (6) mittels einer Steuervorrichtung synchronisiert betrieben werden.

10. Verfahren nach Anspruch 8 oder 9, **dadurch gekennzeichnet, dass** die Fülle (18) mittels einer Füllvorrichtung (23), die durch den Ringspalt (19) gezogen wird und Zufuhrschläuche (27) für die Fülle hinter sich her zieht, in den Ringspalt (19) eingebracht wird, wo sie aushärtet bzw. ausschäumt.

11. Verfahren nach Anspruch 8 oder 9, **dadurch gekennzeichnet, dass** die Fülle (18) durch Rohre oder Schläuche (17), die in ihrem Mantel Löcher (17') aufweisen und beim Einziehen des Wickelrohrs (18) mit der Stirn verbunden sind und als Führungsmittel dienen, in den Ringspalt (19) eingebracht wird, wo sie aushärtet bzw. ausschäumt.
